# EUROPEAN PATENT APPLICATION

(11) **EP 2 383 993 A1**
(43) Date of publication of application: **02.11.2011**
(21) Application number: 10290228.5
(22) Date of filing: 30.04.2010
(51) Int. Cl.: H04N 7/10, H04N 7/173, H04L 12/28, H04B 3/04

(54) **Bi-directional device**

(71) Applicant: NXP Semiconductors B.V., 5656 AG Eindhoven (NL)
(72) Inventor: Villain, Frederic Francois, Redhill, Surrey RH1 1DL (GB)
(74) Representative: Williamson, Paul Lewis

(57) **Abstract**

The present disclosure relates to a bi-directional device for use in switching an upstream frequency band of a cable modem signal. Exemplary embodiments include a bi-directional device (300) for switching an upstream frequency band of a cable modem signal, the device comprising: a first port (305); a second port (306); first and second signal paths (301, 302) between the first and second ports, the first signal path comprising a switch (312); first and second dividers (303, 304) connected to the respective first and second ports and configured to divide a signal from a respective port between the first and second signal paths and to combine signals from the first and second paths at the respective ports; a signal detector (310) configured to detect a signal from the first port; and a controller (311) connected to the signal detector, wherein the controller is configured to cause the switch to close on detection of a signal (402) by the signal detector, thereby allowing a signal from the first port to propagate through the first path to the second port.

## Description

The invention relates to a bi-directional device for use in switching an upstream frequency band of a cable modem signal.

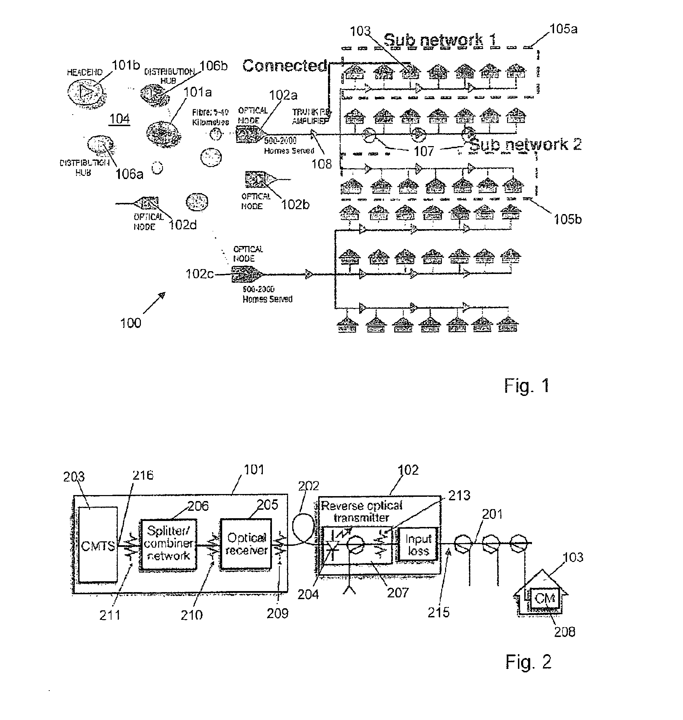

Cable television (or CATV) is a system that was originally set up primarily for delivering television broadcast signals over a cable network, as opposed to wireless radio transmissions. An illustrative example of such a network is shown in figure 1. Conventionally, groups of residences 103 are arranged in networks and sub-networks 105a, 105b, each residence having a cable modem connected to a local node 102a. Multiple such nodes 102a-d are connected to a headend 101a, and multiple headends 101a, 101b are connected together in a transport ring 104 by distribution hubs 106a, 106b. A CATV operator can distribute television (and other) signals to each of the cable modems in the entire network via the transport ring 104 and each node 102a-d to reach many different residences at the same time. This characterises a downstream path for signals, which may be considered to originate at a headend 101a and propagate through a hierarchy of nodes 102a-d, to be received simultaneously by all cable modems in the network. Depending on various factors such as line distance and density of residences, each node 102a-d may serve a network consisting of in the region of 500-2000 cable modems. Additional nodes and headends can be added to increase the size of the network. The network served by a node 102a may be divided into sub-networks 105a, 105b. RF line amplifiers 107 and trunk amplifiers 108 may be provided in order to maintain a desired signal strength throughout the network connected to each node 102a-c.

Developments to CATV networks have also allowed for bidirectional communication to and from each cable modem, for example to allow internet access through use of an upstream (or return) path from each cable modem to the headend 101a and dedicated portions of a downstream frequency path for transmission of data.

In existing CATV networks, each node 102a-d is connected to a headend 101a by optical fibre, which allows for very high bi-directional data throughput rates. Each node 102a-d is however typically connected to the individual cable modems in a network by coaxial radiofrequency (RF) cabling, which is more limited in capacity than optical fibre and results in various problems. A main problem with such an arrangement is that return paths from cable modems within a common network are combined. This results in an accumulation of noise within each local network. In hybrid fibre-coaxial (HFC) systems such as that illustrated in figure 1, this is known as noise funnelling in the return path. Because the input signals from multiple cable modem subscribers are combined at the node level, noise generated in this way also contributes to an overall degradation in the carrier to interference (C/I) ratio at the headend.

A typical HFC network path between a cable modem 208 at an individual residence 103 and a network headend 101 is illustrated schematically in Figure 2. Upstream noise from each residence 103 in a sub-network connected to the node 102 is combined over RF cabling 201, resulting in an accumulation of noise from multiple cable modems in the network at an input 215 of the node 102. The node 102 transmits upstream signals, which includes this noise, via optical fibre 202 to the headend 101 with a optical transmitter 207 comprising a return path laser 204. Signals received at the headend 101 at an optical receiver 205 are, after being combined with other signals received from other nodes by a splitter/combiner network 206, processed by a cable modem termination system (CMTS) 203. The hub or headend 101 also comprises an optical attenuator 209 prior to the optical receiver 205, a receiver input pad 210 between the optical receiver 205 and the splitter/combiner 206 and a CMTS input pad 211 between the splitter/combiner 206 and an input 216 of the CMTS. The node 102 also comprises input loss 212, and the optical transmitter 207 comprises a transmitter input pad 213 and a transmitter input test point 214 for applying test signals to the transmitter 207.

The main contributory factors in noise and interference at the input to the CMTS 203 are:
i) thermal noise contributed by each cable modem upstream amplifier;
ii) thermal noise contributed by distribution amplifiers and line extenders in the HFC network;
iii) relative intensity noise (RIN) contributed by the optical node return path laser 204;
iv) intermodulation distortion contributed by amplifiers and the return laser 204;
v) shot noise and receiver noise within the optical detector 205 at the headend 101;
vi) multiple reflections within the HFC system; and
vii) ingress and burst noise.

Of the above factors, those that are contributed by each cable modem are typically the most difficult to address, since their effect is additive for each network connected to a common node 102.

Ingress noise typically originates from man-made sources such as shortwave radio, AM and FM radio emissions, refrigerator compressors and other electrical equipment that generates incidental or intentional radiofrequency noise. This noise leaks into the RF cable 201 and affects the upstream channel from each cable modem 208. This noise typically has the form of narrowband interference, generally of around a 20 KHz bandwidth and at frequencies lower than 15 MHz.

Burst noise also occurs within a similar frequency range, typically below 10 MHz, as a result of time division multiple access (TDMA) modes of cable modem upstream amplifiers.

In order to prevent this noise from disturbing upstream communication, CATV networks require continuous maintenance and considerable capital expenditure to allow for network capacity improvements as increased numbers of cable modems are connected to each node. Because much of the noise problems depend on the fundamental cable network architecture, this noise is impossible to remove entirely, although it may be accommodated or alleviated by, for example, implementing sophisticated algorithms or hardware at the CMTS level.

As the current trend continues towards both higher speeds and improved quality of service, both for downstream and upstream signals, noise effects in upstream signals will continue to be a significant problem, at least while network architectures based on nodes serving multiple cable modems via RF cabling networks are used.

Techniques and devices have recently been developed to attempt to address the problem of upstream noise in CATV systems. One such example is disclosed in US 6775840, in which a CMTS is configured to find 'clean' channels in the upstream frequency spectrum using a spectrum analyzer, together with programmable channel selection to intelligently select low noise channels for upstream transmissions. An alternative example is disclosed in US 2008/0168518, in which downstream management messages are used that contain information about uploading times and channel frequencies to be used by user groups in the system, so that only selected user groups may transmit on an upstream channel at any time, thereby reducing accumulation of ingress noise. Devices such as the DNB-5600 from Hitron Technologies (www.hitron.com.tw) are available that are aimed at addressing ingress noise, and are configured for up to v3.0 of the current DOCSIS (Data Over Cable Service Interface Specification) standard, an international telecommunications standard for high-speed data transfer over CATV systems.

Existing solutions may therefore be capable of avoiding some interference noise in an upstream channel, or providing a workaround solution by effectively allowing time division access for groups of cable modems. These solutions are, however, limited in their ability to reduce the accumulation of ingress noise while also maintaining a high upstream capacity.

It is an object of the invention to address one or more of the above problems.

In accordance with a first aspect of the invention there is provided a bi-directional device for switching an upstream frequency band in a cable television system, the device comprising:
a first port;
a second port;
first and second signal paths between the first and second ports, the first signal path comprising a switch;
first and second dividers connected to the respective first and second ports and configured to divide a signal from a respective port between the first and second signal paths and to combine signals from the first and second paths at the respective ports;
a signal detector configured to detect a signal from the first port; and
a controller connected to the signal detector,
wherein the controller is configured to cause the switch to close on detection of a signal by the signal detector, thereby allowing a signal from the first port to propagate through the first path to the second port.

Implementing a device according to the invention in a CATV system enables an upstream path to be switched in and out of the local network depending on whether a cable modem to which the device is connected (or forms a part of) is attempting to transmit on the upstream path, i.e. via the first port of the device. Because only those devices that detect a signal being transmitted on the upstream path will allow an upstream connection between the first and second ports, accumulation of upstream noise can be substantially reduced, while maintaining a high quality of service and upstream connection speed.

The controller may be configured to cause the switch to connect the first signal path from the first port across an impedance to ground when the signal is not detected by the signal detector. Connecting the first port across an impedance, rather than to open circuit, creates an absorptive network that prevents reflections being set up in the upstream signal path.

The first path preferably comprises a first amplifier configured to amplify a signal from the first port at an input of the amplifier connected to the first divider and provide an amplified signal at an output of the amplifier connected to the second divider when the switch is closed.

With the switch considered a first switch, an output of the first amplifier may be connected to the second divider via a second switch, and the controller configured to close the second switch when the first switch is closed. Isolating the first (or upstream) amplifier further reduces any accumulated noise effects that may be contributed by the amplifier or the controller.

The second path may comprise a second amplifier configured to amplify a signal from the second port, thereby amplifying downstream signals propagating along the second path from the second port to the first port, while also isolating the downstream path from the upstream path.

The first and second dividers are preferably configured to divide signals from the first and second ports into an upstream frequency band on the first path and a downstream frequency band on the second path.

The signal detector may be configured to detect a burst signal from the first port above a threshold value. A burst signal will typically indicate that an upstream transmission is being made by a cable modem connected to the first port.

The signal detector, which may comprise a low pass filter and a diode, may be connected to the first port via the first divider, or alternatively may be connected directly to the first port.

The first and second dividers may for example be based on Wilkinson dividers or Lange coupler, among various possibilities.

The second path may comprise a high pass or bandpass filter, while the first path may comprise a low pass or bandpass filter, since upstream frequency bands are typically at a lower frequency region than downstream frequency bands.

According to an embodiment, a cable modem is provided comprising the bi-directional device according to the first aspect of the invention, in which the first path is an upstream signal path and the second path is a downstream signal path, the second port being an output of the cable modem.

In accordance with a second aspect of the invention there is provided a method of reducing ingress noise in a cable modem network, the method comprising:
providing a device according to the first aspect;
connecting the first port of the device to a cable modern;
connecting the second port of the device to a local network of a cable television system; and
operating the device to cause the switch to close when a signal is detected by the signal detector, allowing a signal in an upstream frequency band to propagate from the first port to the second port.

An advantage of the invention is that of a reduction in upstream noise propagation in hybrid coaxial cable networks, and in particular a reduction in noise due to ingress, burst and micro flexion. A device according to the invention thereby allows for an improvement in noise levels at the cable modem termination system level and consequently an ability to increase capacity of the overall network.

The device according to the invention can eliminate or at least reduce the effect of noise sources that contribute to degradation of C/I at the CMTS level, including ingress noise, burst noise and microreflection without the necessity to add an additional high layer protocol. The usage can be made seamless and without any formal message exchange between different parts of the network, and is therefore particularly advantageous as a backwards-compatible upgrade to networks where cumulative noise is a problem.

The invention is described in further detail below, by way of illustrative exemplary embodiments and with reference to the accompanying drawings in which:
figure 1 is a schematic diagram of a typical CATV system;
figure 2 is a schematic diagram of a network path between a headend and a cable modem;
figure 3 is a schematic circuit diagram of an exemplary embodiment of a bi-directional device;
figure 4 is a schematic timing diagram of a burst signal associated with switching an upstream path; and
figure 5 is a schematic circuit diagram of an alternative exemplary embodiment of a bi-directional device.

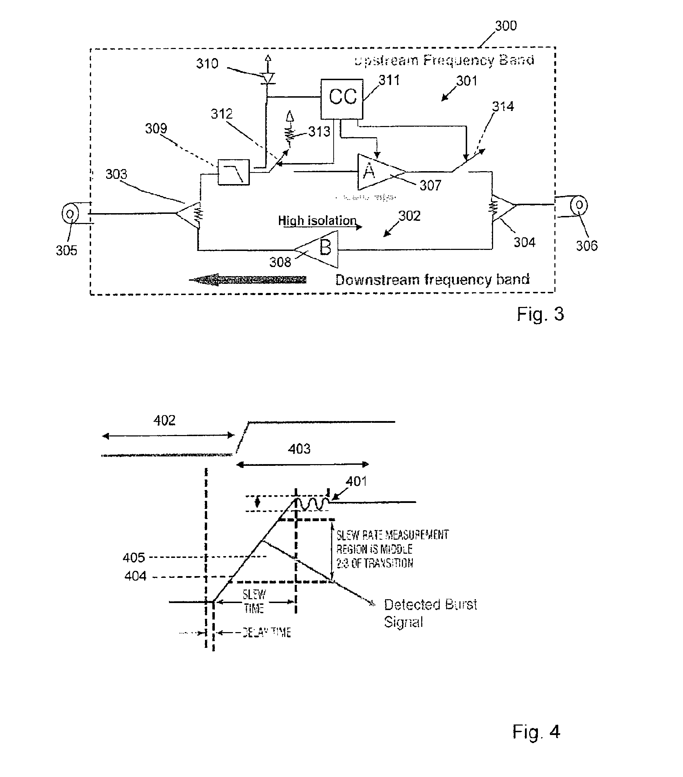

Figure 3 illustrates an embodiment of a device 300 according to the invention. In use, the device 300 is configured to isolate the sub-network part of a return path when there is no upstream traffic. Operation of the device is therefore similar to an Ethernet switch. The device 300 connects the cable modem part of the sub-network that is transmitting, while other cable modems that are not currently transmitting are disconnected. Downstream connections are, however, unaffected.

In addition when the sub-network upstream path is disconnected, a termination load is presented, which reduces micro reflections that may arise as a result of a mismatches between the network and the long propagation line.

The device 300 comprises a first path 301 and a second path 302, being upstream and downstream paths respectively. The paths 301, 302 are connected to first and second splitters or dividers 303, 304, which are connected to respective first and second ports 305, 306. The splitters 303, 304 divide signals from the first and second ports 305, 306 into the first and second paths 301, 302, and also combine signals in the first and second paths at the first and second ports 305, 306. The splitters 303, 304 may be either active or passive, and may for example be implemented in the form of Wilkinson power dividers.

A first upstream amplifier 307 is provided in the upstream path 301 to amplify upstream signals from the first port and to isolate the first path 301 from the second path 302. A second downstream amplifier 308 is provided in the second path 302 to amplify downstream signals from the second port 306 and to isolate the second path 302 from the first path 301. With both amplifiers 307, 308 operational, the upstream frequency band is amplified by the first amplifier 307 while the downstream frequency band is amplified by the second amplifier 308.

In the first path 301, a low-pass filter 309 removes high frequency components and a detector 310, in the form of a diode, connected to the low-pass filter 309 provides a measure of the level of a signal in the upstream frequency band from the first port 305. A controller 311 receives this measure from the detector 310, and controls operation of a switch 312 that connects or disconnects the first path 301 from the first port 305. When the controller 311 detects an upstream signal being transmitted, the switch is closed so that the signal can propagate along the first path from the first port 305 to the second port 306. When an upstream signal is not detected by the controller 311, the switch 312 is operated to disconnect the first path from the first port. Preferably, when an upstream signal is not detected, the switch 312 is operated to connect the first path 301 connected to the first port 305 across a termination load 313. The value of the termination load 313 may be chosen to match the impedance of the line connected to the first port 305, so that reflections are reduced.

In use, a cable modem connected to the first port 305 that begins to transmit a signal in the upstream frequency band causes the controller 311 to connect the cable modem via the first path to an upstream node that is connected to the second port.

The controller 311 preferably also controls operation of the upstream amplifier 307 and a second switch 314 between an output of the upstream amplifier 307 and the second divider 304, so that the amplifier is disconnected from the second divider 304 when no upstream transmission is detected by the detector 310. Disconnecting the amplifier 307 further reduces noise that may be accumulated in the upstream path.

The device may be implemented to allow sub-networks within a network of cable modems connected to a common node to be connected when one or more cable modems are transmitting in the upstream frequency band. The device may alternatively be provided at each cable modem, allowing individual cable modems to be selectively connected and disconnected according to whether upstream transmissions are being made. Typically, at any one time only a proportion of the cable modems in a network are transmitting in the upstream frequency band, so the result of disconnecting all the other cable modems that are not transmitting is a reduction in accumulated noise at the node. This reduces the C/I ratio at the headend CMTS.

The device 300 is preferably configured to operate independently of any other components on the network, and does not need to be specifically controlled in order to operate. An advantage of this is that of simplifying network management.

In operation, when a burst signal is detected in the upstream frequency band by the detector 310, the upstream amplifier 307 is activated by the controller 311, the first switch 312 is closed, connecting the first port to an input of the amplifier 307 via the filter 309, and the second switch 314 is closed, connecting the output of the amplifier 307 to the second port 306, thereby allowing the upstream signal to propagate via the first path 301 to the node.

In the absence of an upstream signal, the controller 311 opens switches 312, 314. The high isolation provided by the amplifier 308 in the downstream path avoids propagation noise coming from the cable modem upstream amplifier connected to the first port 305 from being propagated to the second port. The cumulated noise is therefore reduced and a better C/I level at the CMTS is obtained, because only those sub-networks (or cable modems) having an active upstream transmitter are connected to the rest of the network.

The downstream amplifier 308 can alternatively be replaced by an electronic network based on passive or active devices that connects the frequency downstream path and isolates the upstream frequency band. Such a network could be for example high pass or pass band filter covering the downstream frequency band.

A burst timing diagram is illustrated in figure 4, in which a burst signal 401 is transmitted by a cable modem at the first port 305 of the bi-directional switching device as described above. In a first time period 402 prior to initiation of the burst signal 401 switches 312, 314 are open, so that the first path 301 is disconnected from the second divider 304 and the first divider 303 is connected to the termination load 313, so that no upstream signal is transmitted through the first path 301. Once the burst signal 401 is initiated and reaches a threshold level 404, the controller 311 activates the switches 312, 314, which close after a short time delay. The time taken to close the switches after detection is preferably shorter than the slew time of the burst signal, so that none of the information being transmitted in the upstream path is lost. The switches 313, 314 are therefore closed at a level 405 before the burst signal 402 begins transmitting information.

Once the controller 311 detects that no signals are being transmitted, switches 312, 314 are opened again and the upstream path 301 is disconnected. The controller is preferably configured such that the switches are opened once a preset time has passed after a signal is no longer detected.

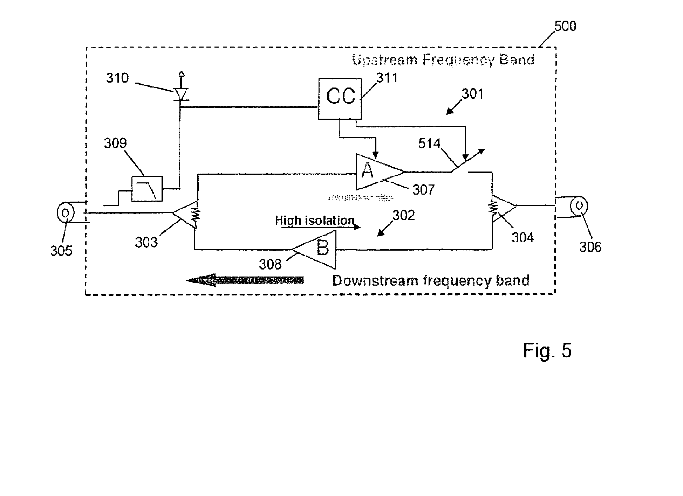

To avoid additional losses in the upstream path 301, the upstream signal detector 310 and the filter 309 could alternatively be connected before the first divider 303, i.e. connected between the first port and an input of the first divider 303, as illustrated in figure 5. The signal detector 310 and filter 309 may be coupled to the first port 305 rather than being directly connected, as illustrated on figure 5. Unlike the embodiment of figure 3, the device 500 may comprise a single switch 514 between the output of the upstream amplifier 307 and the second divider 304, since in this arrangement sufficient isolation from ingress noise in the upstream direction is provided when the switch 514 is opened by the downstream amplifier 308. As with the embodiment of figure 3, the switch 514 is operated by the controller 311 depending on whether an upstream signal is detected by the detector 310. Other components of this alternative embodiment of switching device 500 may be similar to the embodiment of figure 3.

A switching device according to the invention may be incorporated into a cable modem as part of an interface for connecting to a CATV network. The device may also be incorporated into other devices that are configured to connect to CATV systems such as CATV-enabled televisions or stand-alone CATV television receivers, particularly devices that are configured to operate according to the DOCSIS standard.

Other embodiments are intentionally within the scope of the invention as defined by the appended claims.

## Claims

1. A bi-direciional device (300) for switching an upstream frequency band of a cable modem signal, the device comprising:
a first port (305);
a second port (306);
first and second signal paths (301, 302) between the first and second ports (305, 306), the first signal path (301) comprising a switch (312);
first and second dividers (303, 304) connected to the respective first and second ports (305, 306) and configured to divide a signal from a respective port between the first and second signal paths (301, 302) and to combine signals from the first and second paths at the respective ports (305, 306);
a signal detector (310) configured to detect a signal from the first port (305); and
a controller (311) connected to the signal detector (310),
wherein the controller (311) is configured to cause the switch (312) to close on detection of a signal by the signal detector (310), thereby allowing a signal from the first port (305) to propagate through the first path (301) to the second port (306).

2. The device (300) of claim 1 wherein the controller (311) is configured to cause the switch (312) to connect the first signal path (301) from the first port (305) across an impedance (313) to ground when the signal is not detected by the signal detector (310).

3. The device (300) of claim 1 or claim 2 wherein the first path (301) comprises a first amplifier (307) configured to amplify a signal from the first port (305) when the switch (312) is closed.

4. The device (300) of claim 3 wherein the switch (312) is a first switch, an output of the first amplifier (307) is connected to the second divider (304) via a second switch (314), and the controller (311) is configured to close the second switch (312) when the first switch (312) is closed.

5. The device (300) of any preceding claim wherein the second path (302) comprises a second amplifier (308) configured to amplify a signal from the second port (306).

6. The device (300) of any preceding claim wherein the device is configured to divide signals from the first and second ports (305) into an upstream frequency band on the first path (301) and a downstream frequency band on the second path (302).

7. The device (300) of any preceding claim wherein the signal detector (310) is configured to detect a burst signal from the first port (305) above a threshold value (404).

8. The device (300) of any preceding claim wherein the signal detector (310) is connected to the first port (305) via the first divider (303).

9. The device (300) of any preceding claim wherein the first and second dividers (303, 304) are Wilkinson dividers.

10. The device (300) of any preceding claim wherein the second path (302) comprises a high pass or bandpass filter.

11. The device (300) of any preceding claim wherein the first path (301) comprises a low pass or bandpass filter (309).

12. A cable modem (208) comprising a device (300) according to any preceding claim, wherein the first path (301) is an upstream signal path and the second path (302) is a downstream signal path, the second port (306) being an output of the cable modem (208).

13. A method of reducing ingress noise in a cable modem network (100), the method comprising:
providing a device (300) according to any one of claims 1 to 11;
connecting the first port (305) of the device to a cable modem (208);
connecting the second port (306) of the device to a cable modem network (100); and
operating the device (300) to cause the switch (312) to close when a signal (402) in an upstream frequency band is detected by the signal detector (310), allowing the signal (402) to propagate from the first port (305) to the second port (306).
